# EUROPEAN PATENT APPLICATION

(11) **EP 4 841 740 A1**
(43) Date of publication of application: **18.11.2026**
(21) Application number: 25790702.2
(22) Date of filing: 18.04.2025
(51) Int. Cl.: H01M 10/0567, H01M 10/0569, H01M 4/58, H01M 4/38, H01M 4/36, H01M 10/052

(54) **ELECTROLYTE FOR LITHIUM SULFUR BATTERY**

(30) Priority: 18.04.2024 KR 20240052295; 17.04.2025 KR 20250050447
(71) Applicant: LG Energy Solution, Ltd., Seoul 07335 (KR); Korea Advanced Institute of Science and Technology, Daejeon 34141 (KR)
(72) Inventor: JEONG, Yo-Chan, Daejeon 34122 (KR); LEE, Jinwoo, Daejeon 34141 (KR); SON, Donghyeok, Daejeon 34141 (KR); YANG, Seung-Bo, Daejeon 34122 (KR); LEE, Chang-Hoon, Daejeon 34122 (KR); HAN, Seongjun, Daejeon 34141 (KR)
(74) Representative: Goddar, Heinz J.
(86) International application number: PCT/KR2025/005304
(87) International publication number: WO 2025/221077

(57) **Abstract**

The present invention relates to an electrolyte for use in a lithium-sulfur battery, the electrolyte comprising a non-aqueous solvent, a lithium salt and a redox-mediating additive. The redox-mediating additive is a compound having a structure in which two or more rings are conjugated and the total number of ring atoms is 8 to 14.

## Description

### TECHNICAL FIELD

The present disclosure relates to an electrolyte for use in a lithium-sulfur battery.

This application is based on and claims priority from Korean Patent Application No. 10-2024-0052295 filed on April 18, 2024 and Korean Patent Application No. 10-2025-0050447 filed on April 17, 2025 with the Korean Intellectual Property Office, the disclosures of which are incorporated herein in its entirety by reference.

### BACKGROUND

As lithium secondary batteries are used in a wide range of applications including not only portable electronic devices but also electric vehicles (EV) and energy storage systems (ESS), there is an increasing demand for lithium secondary batteries with higher capacity, higher energy density and longer life.

Among lithium secondary batteries, lithium-sulfur batteries are a battery system using a sulfur-based material containing a sulfur-sulfur bond as a positive electrode active material, and a lithium metal, a carbon-based material in which intercalation/deintercalation of lithium ions takes place, or silicon or tin that forms an alloy with lithium as a negative electrode active material.

In lithium-sulfur batteries, the theoretical specific capacity based on conversion reaction (S₈ +16Li⁺ +16e⁻ → 8Li₂S) between lithium ions and sulfur in the positive electrode amounts to 1,675 mAh/g, and when lithium metal is used as the negative electrode, the theoretical energy density is 2,600 Wh/kg. Because this value is higher than the theoretical energy density of other battery systems currently being studied (Ni-MH battery: 450 Wh/kg, Li-FeS battery: 480 Wh/kg, Li-MnO₂ battery: 1,000 Wh/kg, Na-S battery: 800 Wh/kg) and lithium ion batteries (250 Wh/kg), lithium-sulfur batteries are gaining attention as a high-capacity, eco-friendly and low-cost lithium secondary battery among secondary batteries developed so far.

However, lithium-sulfur batteries have reductions in reversible capacity and cycling stability over the repeated charge and discharge cycles due to high energy barrier of lithium sulfide conversion reaction.

To solve this problem, different types of electrochemical catalysts are being developed, but most of them improve battery performance in excessive electrolyte conditions in which three-phase interfaces (catalyst/conductive support/electrolyte) are easily formed. However, the use of excessive electrolytes in batteries reduces energy density of the batteries, which renders it unfit for development of batteries requiring high energy density performance.

Accordingly, many studies have been conducted on electrochemical catalysts that are active in extremely low electrolyte conditions, but due to the very high electrolyte viscosity in extremely low electrolyte conditions, slow lithium ion conduction and low access of lithium polysulfide to three-phase interfaces result in limited catalytic activity.

Therefore, it is important to develop catalysts and additives having high catalytic activity in extremely low electrolyte conditions when used in lithium-sulfur batteries.

### DISCLOSURE

### Technical Problem

To solve the above-described problems,
the present disclosure is directed to developing and providing an electrolyte additive for promoting redox reaction of lithium-sulfur batteries in extremely low electrolyte conditions. Through this, the present disclosure is directed to providing an electrolyte composition for preventing the decline in reversible capacity of lithium-sulfur batteries in extremely low electrolyte conditions and significantly improving energy density of lithium-sulfur batteries.

Ultimately, the present disclosure is directed to providing lithium-sulfur batteries with improved performance using the provided electrolyte.

### Technical Solution

To achieve the above-described objectives,
according to an aspect of the present disclosure, there is provided an electrolyte for a lithium-sulfur battery of the following embodiments.

The electrolyte according to a first embodiment includes:
a non-aqueous solvent, a lithium salt and a redox mediator additive,
wherein the redox mediator additive is a compound having a structure in which two or more rings are conjugated and a total number of ring atoms ranges from 8 to 14.

According to a second embodiment, in the first embodiment,
the redox mediator additive may be the compound having the structure in which two or three rings are conjugated and the total number of ring atoms ranges from 9 to 13.

According to a third embodiment, in the first or second embodiment,
the redox mediator additive may include 9-fluorenone, 2,1,3- benzothiadiazole, N-methyl phthalimide, naphthalene, 1-naphthol, acenaphthylene, anthracene, benzophenone or a mixture thereof.

According to a fourth embodiment, in any one of the first to third embodiments,
a molar concentration of the redox mediator additive may range from 1 mM to 100 mM.

According to a fifth embodiment, in any one of the first to fourth embodiments,
the electrolyte for the lithium-sulfur battery may further include an inorganic nitrate.

According to a sixth embodiment, in any one of the first to fifth embodiments,
the inorganic nitrate may include a lithium nitrate (LiNO₃)_{.}

According to a seventh embodiment, in any one of the first to sixth embodiments,
the non-aqueous solvent may include 80 vol% or more of ether-based solvent.

According to an eighth embodiment, in any one of the first to seventh embodiments,
the lithium salt may include a fluorine (F)-containing organic lithium salt.

According to a ninth embodiment, in any one of the first to eighth embodiments,
a molar concentration of the redox mediator additive may be lower than a molar concentration of the lithium salt.

According to a tenth embodiment, in any one of the first to ninth embodiments,
a ratio of the molar concentration of the lithium salt to the redox mediator additive may range from 50:1 to 1000: 1.

According to another aspect of the present disclosure, there is provided a lithium-sulfur battery of the following embodiments.

The lithium-sulfur battery according to an eleventh embodiment includes:
the electrolyte for the lithium-sulfur battery according to any one of the first to tenth embodiments, a positive electrode, a negative electrode, a separator interposed between the negative electrode and the positive electrode, and a battery case, wherein the positive electrode includes a sulfur-based compound containing a sulfur (S)-sulfur (S) bond as an active material, and wherein the negative electrode includes a lithium metal layer.

According to a twelfth embodiment, in the eleventh embodiment,
the active material of the positive electrode may include a sulfur-carbon composite in which the sulfur-based compound is loaded at at least one of an outer surface of the porous carbon material and inside of pores of the porous carbon material.

According to a thirteenth embodiment, in the eleventh or twelfth embodiment,
the lithium metal layer may include a lithium metal (Li) foil or a lithium alloy foil.

According to a fourteenth embodiment, in any one of the eleventh to thirteenth embodiments,
a ratio (El/S) of a total weight of the electrolyte for the lithium-sulfur battery to a total weight of the sulfur (S) in the active material of the positive electrode may be equal to or less than 10 g/g.

According to a fifteenth embodiment, in any one of the eleventh to fourteenth embodiments,
the lithium-sulfur battery may be a coin-type, pouch-type or cylindrical battery.

### Advantageous Effects

To promote the conversion reaction of lithium sulfide (Li₂S) in positive electrodes of lithium-sulfur batteries, some approaches use catalysts, but the catalysts are added to fixed locations of the positive electrodes, which limits the formation of three-phase interfaces in extremely low electrolyte conditions. As a consequence, the activity of lithium-sulfur batteries is still low in extremely low electrolyte conditions.

In contrast, according to an aspect of the present disclosure, as the redox mediator additive is added to the electrolyte for lithium-sulfur batteries, the redox mediator additive can flow and move within the battery, leading to high access to the three-phase interfaces. Accordingly, it may promote the conversion reaction of lithium sulfide, thereby providing lithium-sulfur batteries with improved reversible capacity and cycling stability in extremely low electrolyte conditions.

Through this, the use of the electrolyte of the present disclosure may provide lithium-sulfur batteries with improved energy density, reduced overvoltage and improved charge/discharge cycling stability.

### BRIEF DESCRIPTION OF THE DRAWINGS

FIG. 1 shows a CV curve in 10 repeated charge/discharge cycles of a lithium-sulfur battery using an electrolyte of Example 1 in this specification.
FIG. 2 shows a CV curve in one charge/discharge cycle of a lithium-sulfur battery using each of electrolytes of Example 1 and Comparative Example 1 in this specification.
FIG. 3 shows a resistance curve in one charge/discharge cycle of a lithium-sulfur battery using each of electrolytes of Example 1 and Comparative Example 1 in this specification.
FIG. 4 shows a discharge capacity curve over repeated charge/discharge cycles of a lithium-sulfur battery using each of electrolytes of Example 1 and Comparative Example 1 in this specification.

### BEST MODE

Hereinafter, the present disclosure will be described in more detail.

The term "composite" as used herein refers to a material in which two or more materials are combined to form physically or chemically different phases and which exhibits more effective functions.

The term "(poly)sulfide" as used herein is the concept that covers "(poly)sulfide ion (Sₓ²⁻, 1≤x≤8)" and "lithium (poly)sulfide (Li₂Sₓ or Li₂Sₓ⁻ 1≤x≤8)".

The term "polysulfide" used herein is the concept that covers "polysulfide ion (Sₓ²⁻, 1<x≤8)" and "lithium polysulfide (Li₂Sₓ or Li₂Sₓ⁻ 1<x≤8)".

The energy density of a lithium secondary battery may be measured using the following equation.$Energy density = \left[\left(discharge capacity\right)\times \left(operating voltage\right)\right] / \left(cell weight\right)$

As shown in the above equation, even though the discharge capacity is similar at the same operating voltage, when the cell weight is large, it results in low energy density. To increase the reversible capacity, the amount of electrolyte may be increased, but due to the weight of the electrolyte, the increased cell weight is not beneficial to improving the energy density.

According to an aspect of the present disclosure, there is provided an additive in an electrolyte for providing additional reaction pathways for conversion reaction of lithium (poly)sulfide in lean electrolyte conditions, thereby enhancing the formation of three-phase interfaces of catalyst/conductive support/electrolyte in the lithium-sulfur battery.

In this specification, the additive is referred to as a 'redox mediator additive' because it promotes redox reaction of lithium (poly)sulfide.

In the present disclosure, the redox mediator additive is a compound having a structure in which two or more rings are conjugated and the total number of ring atoms is 8 to 14.

The redox mediator additive has a conjugated structure in which electrons are delocalized across the structure to provide additional reaction pathways for redox reaction of lithium (poly)sulfide. In particular, the redox mediator additive includes two or three ring structures to connect all the conjugated structures, and includes a heteroatom in the structure to increase affinity with a non-aqueous solvent in the electrolyte. The heteroatom includes, for example, an oxygen atom, a nitrogen atom, a sulfur atom, a phosphorus atom, or two or more thereof.

Specifically, considering the solubility of the redox mediator additive in the electrolyte, the redox mediator additive may contain two or three conjugated rings, and the total number of ring atoms may range from 8 to 14, specifically, from 9 to 14, and more specifically, from 9 to 13, from 9 to 12, from 9 to 11, from 9 to 10, or from 8 to 9.

More specifically, the heteroatom included in the redox mediator additive may include an oxygen atom, a nitrogen atom, a sulfur atom, or two or more thereof, in order to form a stable conjugated system, but the present disclosure is not limited thereto.

In an embodiment of the present disclosure, the redox mediator additive may be a polycyclic aromatic compound containing two or three aromatic conjugated rings. Preferably, the redox mediator additive may have two or three aromatic rings directly bonded in contact with each other and includes one or more heteroatoms. The redox mediator additive may include, but is not limited to, naphthalene, 1-naphthol, acenaphthylene, anthracene, benzophenone, 9-fluorenone, 2,1,3-benzothiadiazole, N-methyl phthalimide or a mixture thereof.

In an embodiment of the present disclosure, in terms of high efficiency of the redox mediator additive, the two or three rings may be directly bonded in contact with each other.

In an embodiment of the present disclosure, the redox mediator additive may include one or more heteroatoms in the structure, and contain two or three rings directly bonded in contact with each other.

In an embodiment of the present disclosure, the redox mediator additive may include, for example, 9-fluorenone, 2,1,3-benzothiadiazole, N-methyl phthalimide or a mixture thereof, but the present disclosure is not limited thereto.

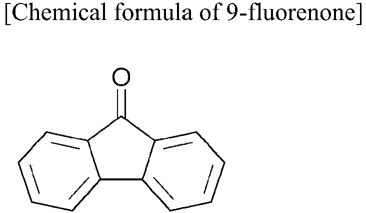

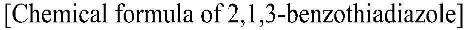

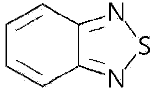

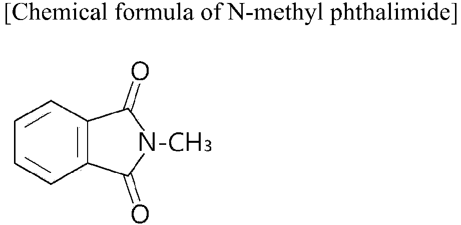

In an embodiment of the present disclosure, the redox mediator additive may include 9-fluorenone.

In an embodiment of the present disclosure, the redox mediator additive may include 2,1,3-benzothiadiazole.

In an embodiment of the present disclosure, the redox mediator additive may include N- methyl phthalimide.

In an embodiment of the present disclosure, the molar concentration of the redox mediator additive in the electrolyte may preferably range, for example, from 1 mM to 100 mM. Specifically, the molar concentration of the redox mediator additive in the electrolyte may range from 1 mM to 50 mM, from 1 mM to 25 mM, from 1 mM to 20 mM, from 5 mM to 15 mM, or from 5 mM to 10 mM. When the molar concentration of the redox mediator additive fall within the aforementioned range, this may have a beneficial effect on solubility in the electrolyte and increased reversible capacity and reduced overvoltage of the lithium-sulfur battery, but the present disclosure is not limited thereto.

In an embodiment of the present disclosure, the redox mediator additive may be included in a sufficient amount to provide additional reaction pathways for redox reaction between inorganic sulfur (S₈) or lithium sulfide (Li₂S) present in the positive electrode and lithium polysulfide (Li₂S_{x,} 1<x≤8) when it is dissolved in the electrolyte, and may be preferably included at a lower concentration than the lithium salt in the electrolyte.

In this aspect, according to an embodiment of the present disclosure, preferably, the molar concentration of the redox mediator additive may be lower than the molar concentration of the lithium salt. Specifically, a ratio of the molar concentration of the lithium salt to the redox mediator additive in the electrolyte may range, for example, from 50:1 to 1000:1, specifically from 50:1 to 500:1, from 50:1 to 250:1, from 50:1 to 200:1, from 50:1 to 150:1, from 100:1 to 200:1, or from 100:1 to 150:1.

In the present disclosure, the lithium salt refers collectively to all salt compounds containing lithium ions (Li⁺) as cations. The lithium salt may be included as a transport medium of lithium ions and electrons between the positive electrode and the negative electrode.

In an embodiment of the present disclosure, the lithium salt may include an organic lithium salt, an inorganic lithium salt, or a mixture thereof.

Specifically, the lithium salt may include a fluorine (F)-containing organic lithium salt. For example, the lithium salt may include LiCF₃SO₃, LiCF₃CO₂, LiSO₃CF₃, LiN (SO₂CF₃)₂, LiN(SO₂C₂F₅)₂, LiC(SO₂CF₃)₃ or a mixture thereof as the fluorine-containing organic lithium salt, but the present disclosure is not limited thereto.

In an embodiment of the present disclosure, the lithium salt may include a fluorine (F)-containing inorganic lithium salt. For example, the lithium salt may include LiBF₄, LiPF₆, LiAsF₆, LiSbF₆, LiN (SO₂F)₂or a mixture thereof as the fluorine-containing inorganic lithium salt, but the present disclosure is not limited thereto.

In an embodiment of the present disclosure, the lithium salt may include a mixture of the fluorine (F)-containing organic lithium salt and the fluorine (F)-containing inorganic lithium salt, but the present disclosure is not limited thereto.

In another embodiment of the present disclosure, the lithium salt may be consisted of the fluorine-containing organic lithium salt. Specifically, the lithium salt may include LiN(SO₂CF₃)₂ (LiTFSI) alone. When the lithium salt includes LiTFSI alone, this may have a beneficial effect on improved reactivity of lithium (poly)sulfide by the redox mediator additive in the electrolyte, but the present disclosure is not limited thereto.

In an embodiment of the present disclosure, the lithium salt may further include any lithium salt other than the fluorine-containing lithium salt, used in the electrolyte of the lithium-sulfur battery, without departing from the scope of the present disclosure. For example, the lithium salt further included in the present disclosure may include, for example, LiCl, LiBr, LiI, LiClO₄, LiB₁₀Cl₁₀, LiC₄BO₈, LiAlCl_{4,} LiSO₃CH₃, lithium chloroborane, lower aliphatic carboxylic acid lithium, lithium tetraphenylborate, lithium imide, or two or more thereof, but the present disclosure is not limited thereto.

In an embodiment of the present disclosure, the molar concentration of the lithium salt may be limited to, for example, 1.75 M or less, specifically, 1.5 M or less, or 1.0 M or less, on the basis of the mixture of the non-aqueous solvent and the lithium salt. Alternatively, the molar concentration of the lithium salt may range, for example, from 0.5 M to 1.75 M, from 0.75 M to 1.5 M, or from 0.75 M to 1.0 M, on the basis of the mixture of the non-aqueous solvent and the lithium salt. When the concentration of the lithium salt falls within the aforementioned range, this may have a beneficial effect on solubility of the lithium salt in the electrolyte and improved battery performance by the redox mediator additive, but the present disclosure is not limited thereto.

Meanwhile, the lithium secondary battery is characterized in that lithium ions are reduced on the surface of the negative electrode during charging and discharging, causing lithium metal deposition on the negative electrode over the repeated charging and discharging. According to an aspect of the present disclosure, the electrolyte may further include a nitrate to suppress and prevent dendrite formation of lithium ions on the surface of the negative electrode including a lithium metal layer, thereby improving life and Coulombic efficiency of the lithium-sulfur battery using the same.

In the present disclosure, the nitrate refers collectively to all salt compounds containing nitrate (-NO₃⁻) as anions. In this instance, the nitrate may include lithium nitrate (LiNO₃) which is a type of inorganic nitrate, and because the lithium nitrate contains a lithium ion as the cation and a nitrate ion as the anion, the lithium nitrate may correspond to both the lithium salt and the nitrate. In the present disclosure, the lithium nitrate is not included alone as the lithium salt, and may be included as an additive further included other than the lithium salt as the nitrate.

The nitrate may be used to suppress the elution of polysulfide from the positive electrode into the electrolyte, prevent decomposition and loss of the lithium salt, or contribute to the formation of a protective layer on the negative electrode surface, thereby preventing degradation of the negative electrode and extending the life of the battery, and may include, for example, an inorganic nitrate, an organic nitrate, or a mixture thereof.

In the present disclosure, -NO₃⁻ ion in the nitrate may play a role in forming LiNxOy material in the protective layer (referred to as solid electrolyte interphase (SEI)) on the negative electrode to stabilize the negative electrode, thereby improving the life of the lithium-sulfur battery, but the role is not limited thereto.

The inorganic nitrate may include, for example, a monovalent nitrate, and typically include lithium nitrate (LiNO₃), but the present disclosure is not limited thereto.

In an embodiment of the present disclosure, in addition to the redox mediator additive, the electrolyte may further include the lithium nitrate to provide a beneficial effect on improving lithium (poly)sulfide conversion reaction and stabilizing the negative electrode.

In an embodiment of the present disclosure, the inorganic nitrate may be included in an amount of 0.1 to 8 parts by weight, specifically 0.5 to 6 parts by weight, 1 to 5 parts by weight, 1 to 3 parts by weight, 2 to 3 parts by weight, or 1 to 2 parts by weight, based on 100 parts by weight of the sum of the non-aqueous solvent and the lithium salt, in terms of solubility in the electrolyte. When the inorganic nitrate is included in the aforementioned range of amounts, this may have a beneficial effect on extending the life of the battery by the inorganic nitrate, but the present disclosure is not limited thereto.

In an embodiment of the present disclosure, the non-aqueous solvent is not limited to a particular type and may include any solvent that dissolves the lithium salt and the redox mediator additive in the electrolyte of the lithium-sulfur battery, and when the inorganic nitrate is further included, dissolves the inorganic nitrate. For example, the non-aqueous solvent may include, for example, an ether-based solvent, an ester-based solvent, an amide-based solvent, a carbonate-based solvent, or a mixture thereof. When the electrolyte further includes the inorganic nitrate, preferably, the non-aqueous solvent may not include a carbonate-based solvent in terms of solubility of the inorganic nitrate.

The ether-based solvent may include an acyclic ether, a cyclic ether, or a mixture thereof.

The acyclic ether may include, for example, dimethyl ether, diethyl ether, dipropyl ether, dibutyl ether, diisobutyl ether, ethyl methyl ether, ethylpropyl ether, ethyl tertbutyl ether, dimethoxymethane, trimethoxymethane, dimethoxyethane, diethoxyethane, dimethoxypropane, diethylene glycol dimethyl ether, diethylene glycol diethyl ether, triethylene glycol dimethyl ether, tetraethylene glycol dimethyl ether, ethylene glycol divinyl ether, diethylene glycol divinyl ether, triethylene glycol divinyl ether, dipropylene glycol dimethyl ether, butylene glycol ether, diethylene glycol ethyl methyl ether, diethylene glycol isopropyl methyl ether, diethylene glycol butyl methyl ether, diethylene glycol tertbutyl ethyl ether, ethylene glycol ethyl methyl ether, or a mixture thereof. Preferably, the acyclic ether may include dimethoxyethane, diethoxyethane, diethylene glycol dimethyl ether, triethylene glycol dimethyl ether, tetraethylene glycol dimethyl ether, or a mixture thereof. More preferably, the acyclic ether may include dimethoxyethane.

The cyclic ether may include, for example, 1,3-dioxolane, 4,5-dimethyl-dioxolane, 4,5-diethyl-dioxolane, 4-methyl-1,3-dioxolane, 4-ethyl-1,3-dioxolane, tetrahydrofuran, 2-methyltetrahydrofuran, 2,5-dimethyltetrahydrofuran, 2,5-dimethoxytetrahydrofuran, 2-ethoxytetrahydrofuran, 2-methyl-1,3-dioxolane, 2-vinyl-1,3-dioxolane, 2,2-dimethyl-1,3-dioxolane, 2-methoxy-1,3-dioxolane, 2-ethyl-2-methyl-1,3-dioxolane, tetrahydropyran, 1,4-dioxane, 1,2-dimethoxy benzene, 1,3-dimethoxy benzene, 1,4-dimethoxy benzene and isosorbide dimethyl ether, furan, 2-methylfuran, 3-methylfuran, 2-ethylfuran, 2-propylfuran, 2-butylfuran, 2,3-dimethylfuran, 2,4-dimethylfuran, 2,5-dimethylfuran, 2H-pyran, 4H-pyran, 2-methylpyran, 3-methylpyran, 4-methylpyran, benzofuran, 2-(2-nitrovinyl)furan, or a mixture of two or more selected from them, but is not limited thereto.

In an embodiment of the present disclosure, preferably, the non-aqueous solvent may include 80 vol% or more of ether-based solvent. More specifically, the non-aqueous solvent may only include the ether-based solvent.

In an embodiment of the present disclosure, the non-aqueous solvent may include a mixture of the acyclic ether and the cyclic ether, for example, a mixture of dimethoxyether (DME) and 1,3-dioxolane (DOL).

In an embodiment of the present disclosure, when the non-aqueous solvent includes the mixture of the acyclic ether and the cyclic ether, a mix volume ratio of the acyclic ether to the cyclic ether may specifically range from 9:1 to 1:9, for example, 5:5, but the present disclosure is not limited thereto.

The ester-based solvent may include, for example, any one selected from the group consisting of methyl acetate, ethyl acetate, propyl acetate, methyl propionate, ethyl propionate, propyl propionate, γ-butyrolactone, γ-valerolactone, γ-caprolactone, σ-valerolactone and ε-caprolactone or a mixture thereof, but is not limited thereto.

The carbonate-based solvent may include, for example, dimethyl carbonate, diethyl carbonate, dipropyl carbonate, ethyl methyl carbonate, methyl propyl carbonate, ethyl propyl carbonate, ethylene carbonate, propylene carbonate, 1,2-butylene carbonate, 2,3-butylene carbonate, 1,2-pentylene carbonate, 2,3-pentylene carbonate, vinylene carbonate, vinyl ethylene carbonate, their halogenides (for example, fluoroethylene carbonate), or a mixture thereof, but is not limited thereto.

As described above, in an embodiment of the present disclosure, because the carbonate-based solvent does not dissolve the nitrate, specifically the inorganic nitrate, or has low solubility, the non-aqueous solvent may not include the carbonate-based solvent. In an embodiment of the present disclosure, the non-aqueous solvent may include the carbonate-based solvent in a very small amount so as not to affect the solubility of the nitrate, and for example, when the non-aqueous solvent includes the carbonate-based solvent, the carbonate-based solvent may be included in an amount of 3 wt% or less, 2 wt% or less, 1 wt% or less, 0.5 wt% or less, or 0 wt% (i.e., none) based on the total weight of the electrolyte for the lithium-sulfur battery.

As described above, according to an aspect of the present disclosure, there is provided the electrolyte of the novel composition for achieving high reversible capacity and improved cycling stability when used in the lithium-sulfur battery.

According to another aspect of the present disclosure, there is provided a lithium-sulfur battery including the electrolyte for the lithium-sulfur battery of the above-described composition.

The lithium-sulfur battery includes the above-described electrolyte, a positive electrode, a negative electrode, a separator interposed between the positive electrode and the negative electrode, and a battery case.

According to an aspect of the present disclosure, the lithium-sulfur battery may refer to a battery including a sulfur-based compound containing a sulfur (S)-sulfur (S) bond as a positive electrode active material and a lithium metal layer as the negative electrode.

In an embodiment of the present disclosure, the lithium metal layer may be a thin layer including only lithium metal (Li).

In another embodiment of the present disclosure, the lithium metal layer may be a thin layer including a lithium alloy of lithium and a material that forms an alloy with lithium, for example, silicon, tin, sodium, potassium, rubidium, cesium, francium, beryllium, magnesium, calcium, strontium, barium, radium, aluminum, or two or more thereof.

In an embodiment of the present disclosure, the negative electrode may be in the form of a free-standing film including the lithium metal layer and the protective layer without a support. In this instance, the support may include a current collector commonly used in the electrode for the lithium secondary battery or a polyolefin porous support used as the separator, but is not limited thereto.

In another embodiment of the present disclosure, the negative electrode may include the lithium metal layer and the protective layer (also referred to as solid electrolyte interphase (SEI)) on the support.

In an embodiment of the present disclosure, the negative electrode may include the lithium metal layer and the solid electrolyte interphase (SEI) on the surface of the lithium metal layer. In this instance, the solid electrolyte interface (SEI) may contain one or more elements selected from fluorine atoms (F) and nitrogen atoms (N) as constituent components. More specifically, the solid electrolyte interface may contain at least one element from fluorine atoms (F) derived from the fluorine-containing lithium salt and nitrogen atoms (N) derived from the inorganic nitrate.

In addition, the negative electrode according to an embodiment of the present disclosure may further include any component commonly used in the negative electrode of the lithium secondary battery, particularly the lithium-sulfur battery, without departing from the scope of the present disclosure.

In an embodiment of the present disclosure, the positive electrode is not limited to a particular one and may include those that include a sulfur-based compound containing a sulfur (S)-sulfur (S) bond as the active material.

In an embodiment of the present disclosure, the positive electrode active material may include a sulfur-carbon composite.

In an embodiment of the present disclosure, the sulfur-carbon composite may include a porous carbon material; and a sulfur-based compound loaded at at least one of an outer surface of the porous carbon material and the inside of pores of the porous carbon material. Because sulfur acting as the positive electrode active material has no electrical conductivity, it is used in combination with a conductive material such as the carbon material, and the porous carbon material may be used to load the sulfur. In addition, the sulfur-based compound may include, for example, inorganic sulfur (S₈), lithium sulfide (Li₂S), lithium polysulfide (Li₂Sx, 1 < x ≤ 8), disulfide compounds, carbon-sulfur polymer ((C₂S_{y})ₙ, y = 2.5 to 50, n ≥ 2), or two or more thereof. Preferably, the sulfur-based compound may include inorganic sulfur (S₈)_{.}

In an embodiment of the present disclosure, the porous carbon material is used to load the sulfur-based compound as the positive electrode active material, provide the framework for holding the sulfur-based compound evenly and stably and improve the conductivity of the positive electrode, and is not limited to a particular type and may include any carbon material having porous properties. The porous carbon material may be spherical, rod-like, needle-like, platy, tubular or bulky in shape, and is not limited to a particular shape and may have any shape commonly used in the lithium-sulfur battery. The porous carbon material may include any commonly used ones having a porous structure or high specific surface area.

For example, the porous carbon material may include at least one selected from the group consisting of graphite; graphene; carbon black such as Denka black, acetylene black, Ketjen black, channel black, furnace black, lamp black or thermal black; carbon nanotubes (CNTs) such as single-walled carbon nanotubes (SWCNT) or multi-walled carbon nanotubes (MWCNT); carbon fibers such as graphite nanofibers (GNF), carbon nanofibers (CNF) or activated carbon fibers (ACF); and graphite such as natural graphite, artificial graphite or expandable graphite and activated carbon, but is not limited thereto. Preferably, the porous carbon material may be carbon nanotubes.

In an embodiment of the present disclosure, the porous carbon material may include, for example, carbon nanotubes (CNT).

In an embodiment of the present disclosure, the sulfur-carbon composite may include the sulfur-based compound in an amount of 65 wt% or more, for example, from 65 wt% to 90 wt%, from 65 wt% to 85 wt%, from 70 wt% to 80 wt%, or from 70 wt% to 75 wt%, based on the total weight of the sulfur-based compound and the porous carbon material. When the amount of the sulfur-based compound in the sulfur-carbon composite falls within the aforementioned range, this may have a beneficial effect on electron transport area of the sulfur-carbon composite and electrolyte wettability of the positive electrode, and for example, increasing the usable surface area in the sulfur-carbon composite, thereby suppressing the elution of sulfur from the positive electrode, but the present disclosure is not limited thereto.

The method for producing the sulfur-carbon composite is not limited to a particular one in the present disclosure, and may include any method commonly used in the art. For example, one of the methods may include simply mixing the sulfur and the porous carbon material and performing thermal treatment to form a composite. Specifically, the sulfur-carbon composite may be formed by a melt-diffusion method, and for example, the sulfur-carbon composite may be formed by mixing the carbon material and the sulfur-based compound and thermally treating at 150°C to 160°C for 10 to 24 hours, for example, at 155°C for 12 hours.

In an embodiment of the present disclosure, in addition to the positive electrode active material, the positive electrode active material layer may further include a conductive material, a binder and an additive. The conductive material, the binder and other component in the positive electrode active material layer may include any commonly used ones, and are not particularly limited to the present disclosure.

In an embodiment of the present disclosure, the positive electrode includes a current collector having the positive electrode active material layer on one or two sides. The current collector supports the positive electrode active material and is not limited to a particular one and may include those having high conductivity without causing any chemical change in the corresponding battery. For example, the current collector may include copper, stainless steel, aluminum, nickel, titanium, palladium, calcined carbon, copper or stainless steel treated with carbon, nickel or silver on the surface, or aluminum-cadmium alloys.

The positive electrode current collector may have the microtextured surface to increase the bond strength with the positive electrode active material, and may come in different forms, for example, film, sheet, foil, mesh, net, porous body, foam or non-woven fabric.

In an embodiment of the present disclosure, the separator separates or insulates the positive electrode from the negative electrode and facilitates lithium ion transport between the positive electrode and the negative electrode. The separator may be made of a porous non-conductive or insulating material, and is not limited to a particular type and may include any separator commonly used in the lithium secondary battery. The separator may include a free-standing film or a coating layer added to the positive electrode and/or the negative electrode.

In an embodiment of the present disclosure, the lithium-sulfur battery may have a variety of shapes, for example, a coin shape, a pouch shape or a cylindrical shape, but is not limited thereto.

In an embodiment of the present disclosure, the electrolyte for the lithium-sulfur battery may have an effect of achieving high performance lithium-sulfur batteries in lean electrolyte conditions.

In this instance, the lean electrolyte condition may be described through a weight ratio between the sulfur (S) included as the positive electrode active material and the electrolyte in the lithium-sulfur battery.

For example, the lithium-sulfur battery of the present disclosure may preferably have an electrolyte-to-sulfur ratio (El/S) of 10 g/g or less, for example, 5 g/g or less, wherein the electrolyte-to-sulfur ratio (El/S) refers to a ratio of the total weight of the electrolyte to the total weight of the sulfur (S) in the positive electrode. For example, the electrolyte-to-sulfur ratio (El/S) may range from 2.0 g/g to 10 g/g, from 2.0 g/g to 8.0 g/g, specifically from 3.0 g/g to 7.0 g/g, and more specifically from 4.5 g/g to 5.5 g/g. For example, the El/S may be 5.0 g/g.

The use of the electrolyte according to an aspect of the present disclosure may have an effect of achieving the lithium-sulfur battery having the aforementioned range of El/S ratios, thereby improving energy density. However, the El/S ratio of the lithium-sulfur battery using the electrolyte may be higher than the aforementioned range in the battery, and the present disclosure is not limited thereto.

Hereinafter, examples are presented to help the understanding of the present disclosure, but the following examples are provided to describe the present disclosure for illustration purposes, and it will be apparent to those skilled in the art that a variety of changes and modifications may be made thereto within the technical aspects and scope of the present disclosure, and the changes and modifications fall within the scope of the appended claims.

### [Preparation of electrolyte]

### Comparative Example 1

1 M lithium bis(trifluoromethanesulfonyl)imide (LiTFSI, LiN(SO₂CF₃)₂) and 2 wt% of lithium nitrate (LiNO₃) as an inorganic nitrate were added to a mixture solvent (1:1 v/v) of 1,3,-dioxolane (DOL) and 1,2-dimethoxyethane (DME) and dissolved to prepare an electrolyte.

### Example 1

10 mM of N-methyl phthalimide as a redox mediator additive was further added to the electrolyte of Comparative Example 1 and stirred for 24 hours to prepare an electrolyte.

### [Manufacture of lithium-sulfur battery]

A CR2032 coin cell lithium-sulfur battery was manufactured using the electrolyte of each of Comparative Example 1 and Example 1 by the following method:

As a negative electrode, a 200 µm-thick lithium foil was prepared, and as a separator, Celgard 2400 was used.

As a positive electrode, inorganic sulfur (S₈) and multi-walled carbon nanotubes (MWCNT) were mixed at a mass ratio of 7:3 and thermally treated at 155°C for 12 hours to prepare a sulfur-carbon composite as a positive electrode active material, and 90 wt% of the as-prepared sulfur-carbon composite and 10 wt% of PVDF as a binder were dispersed in NMP as a solvent to prepare a positive electrode slurry composition. The positive electrode slurry composition was applied to two surfaces of an aluminum current collector, dried at 80°C, and rolled using a roll press to prepare an electrode having the loading of 4 mgₛ/cm².

An electrode assembly of the positive electrode/separator/negative electrode was placed in a coin-type case, and each of the as-prepared electrolytes was injected, followed by covering with a lid and sealing to manufacture a lithium-sulfur battery. In this instance, to determine the performance of the redox mediator additive in lean electrolyte conditions, the electrolyte was injected at an electrolyte-to-sulfur ratio (El/S) of 5.0 g/g, wherein the electrolyte-to-sulfur ratio (El/S) refers to a ratio of the amount of electrolyte to the amount of sulfur (S) in the positive electrode.

### [Performance evaluation of lithium-sulfur battery]

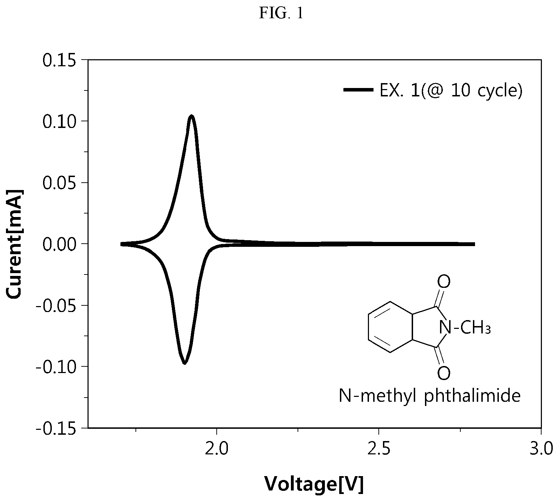

The as-prepared lithium-sulfur battery was activated by discharging at 0.1C three times at 30°C, and then charged at 0.1C and discharged at 0.1C (CC mode, 1.8V to 2.5V) over repeated charge and discharge cycles. FIGS. 1 to 4 show the results of battery performance evaluation during charging and discharging.

FIG. 1 shows a CV curve in 10 charge/discharge cycles of the lithium-sulfur battery using the electrolyte of Example 1. According to FIG. 1, it was confirmed that the redox mediator additive according to an embodiment of the present disclosure may work reversibly.

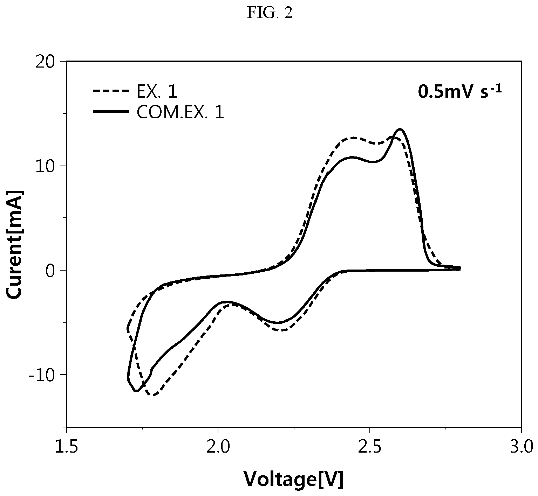

FIG. 2 shows a CV curve in one charge/discharge cycle of the lithium-sulfur battery using the electrolyte of each of Comparative Example 1 and Example 1. According to FIG. 2, it was confirmed that the electrolyte including the redox mediator additive according to an embodiment of the present disclosure may promote conversion reaction of sulfur, thereby reducing overvoltage.

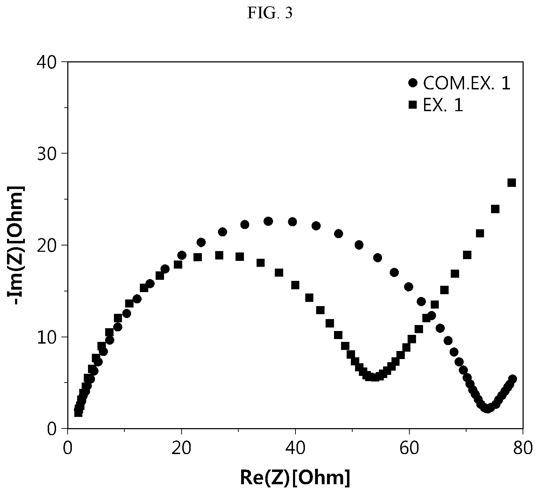

FIG. 3 shows the resistance measurement results in one charge/discharge cycle of the lithium-sulfur battery using the electrolyte of each of Comparative Example 1 and Example 1. According to FIG. 3, it was confirmed that the electrolyte including the redox mediator additive according to an embodiment of the present disclosure may reduce the resistance in the battery, thereby promoting conversion reaction of sulfur and improving reversible capacity of the battery.

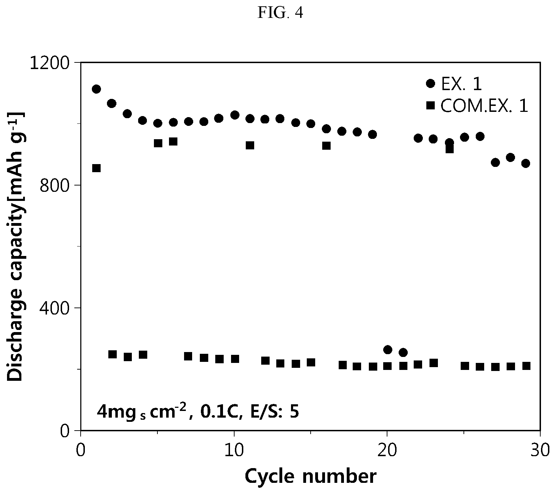

FIG. 4 shows the discharge capacity measurement results over repeated charge/discharge cycles of the lithium-sulfur battery using the electrolyte of each of Comparative Example 1 and Example 1. According to FIG. 4, it was confirmed that the electrolyte including the redox mediator additive according to an embodiment of the present disclosure may improve cycling stability in lean electrolyte conditions.

Through the experiment, it was confirmed that the lithium secondary battery, particularly the lithium-sulfur battery using the electrolyte according to an embodiment of the present disclosure may have a significant life and Coulombic efficiency improvement effect.

## Claims

1. An electrolyte for a lithium-sulfur battery, comprising:
a non-aqueous solvent, a lithium salt and a redox mediator additive,
wherein the redox mediator additive is a compound having a structure in which two or more rings are conjugated and a total number of ring atoms ranges from 8 to 14.

2. The electrolyte for the lithium-sulfur battery according to claim 1,
wherein the redox mediator additive is the compound having the structure in which two or three rings are conjugated and the total number of ring atoms ranges from 9 to 13.

3. The electrolyte for the lithium-sulfur battery according to claim 1,
wherein the redox mediator additive has two or three aromatic rings directly bonded in contact with each other and includes one or more heteroatoms.

4. The electrolyte for the lithium-sulfur battery according to claim 1,
wherein the redox mediator additive includes 9-fluorenone, 2,1,3- benzothiadiazole, N-methyl phthalimide, naphthalene, 1-naphthol, acenaphthylene, anthracene, benzophenone or a mixture thereof.

5. The electrolyte for the lithium-sulfur battery according to claim 1,
wherein a molar concentration of the redox mediator additive ranges from 1 mM to 100 mM.

6. The electrolyte for the lithium-sulfur battery according to claim 1, further comprising:
an inorganic nitrate.

7. The electrolyte for the lithium-sulfur battery according to claim 6,
wherein the inorganic nitrate includes a lithium nitrate (LiNO₃)_{.}

8. The electrolyte for the lithium-sulfur battery according to claim 1,
wherein the non-aqueous solvent includes 80 vol% or more of ether-based solvent.

9. The electrolyte for the lithium-sulfur battery according to claim 1,
wherein the lithium salt includes a fluorine (F)-containing organic lithium salt.

10. The electrolyte for the lithium-sulfur battery according to claim 1,
wherein a molar concentration of the redox mediator additive is lower than a molar concentration of the lithium salt.

11. The electrolyte for the lithium-sulfur battery according to claim 10,
wherein a ratio of the molar concentration of the lithium salt to the redox mediator additive ranges from 50:1 to 1000: 1.

12. A lithium-sulfur battery comprising:
the electrolyte for the lithium-sulfur battery according to any one of claims 1 to 11, a positive electrode, a negative electrode, a separator interposed between the negative electrode and the positive electrode, and a battery case,
wherein the positive electrode includes a sulfur-based compound containing a sulfur (S)-sulfur (S) bond as an active material, and
wherein the negative electrode includes a lithium metal layer.

13. The lithium-sulfur battery according to claim 12,
wherein the active material of the positive electrode includes a sulfur-carbon composite in which the sulfur-based compound is loaded at at least one of an outer surface of the porous carbon material and inside of pores of the porous carbon material.

14. The lithium-sulfur battery according to claim 12,
wherein the lithium metal layer includes a lithium metal (Li) foil or a lithium alloy foil.

15. The lithium-sulfur battery according to claim 12,
wherein a ratio (El/S) of a total weight of the electrolyte for the lithium-sulfur battery to a total weight of the sulfur (S) in the active material of the positive electrode is equal to or less than 10 g/g.

16. The lithium-sulfur battery according to claim 12,
wherein the lithium-sulfur battery is a coin-type, pouch-type or cylindrical battery.
